# EUROPÄISCHE PATENTSCHRIFT

(11) **EP 4 516 173 B1**
(45) Veröffentlichungstag und Bekanntmachung des Hinweises auf die Patenterteilung: **24.06.2026**
(21) Anmeldenummer: 23194191.5
(22) Anmeldetag: 30.08.2023
(51) Int. Cl.: A47J 36/32, A47J 43/046

(54) **VERFAHREN ZUM BETREIBEN EINES KÜCHENGERÄTS, SYSTEM, COMPUTERPROGRAMM UND STEUEREINRICHTUNG**
METHOD FOR OPERATING A KITCHEN APPLIANCE, SYSTEM, COMPUTER PROGRAM AND CONTROL DEVICE
PROCÉDÉ DE FONCTIONNEMENT D'UN APPAREIL DE CUISINE, SYSTÈME, PROGRAMME INFORMATIQUE ET DISPOSITIF DE COMMANDE

(43) Veröffentlichungstag der Anmeldung: 05.03.2025
(73) Patentinhaber: Vorwerk & Co. Interholding GmbH, 42275 Wuppertal (DE)
(72) Erfinder: Beckmann, Nils, 42853 Remscheid (DE); Thies, Felix, 31303 Burgdorf (DE); Uhlenbrock, Andreas, 81243 München (DE)
(74) Vertreter: Cohausz & Florack

(56) Entgegenhaltungen:
- EP-A1- 3 636 118
- EP-A1- 3 730 005
- EP-A1- 3 841 926
- US-A1- 2021 315 216
- US-A1- 2022 167 788

## Beschreibung

Die vorliegende Erfindung betrifft ein Verfahren zum Betreiben eines Küchengeräts.

Die vorliegende Erfindung betrifft weiter ein System zur Zubereitung von Lebensmitteln, mit einem Grundgerät, mit mindestens einem Zubehörteil, mit einer Sensoreinrichtung, mit einer Steuereinrichtung, mit einem Speichermedium für eine Datenbank, und mit einer Kommunikationsschnittstelle, wobei die Datenbank mindestens eine Nutzerinformation und mindestens eine vordefinierte Zubereitungsvorschrift aufweist. Die vorliegende Erfindung betrifft weiter ein Computerprogramm und eine Steuereinrichtung.

Aus dem Stand der Technik sind Systeme und Verfahren zur Zubereitung von Lebensmitteln bekannt, bei denen Lebensmittelinformationen anhand von entsprechender Sensorik erfasst und bei einer automatischen Auswahl eines Rezepts oder einer Zubereitungsvorschrift berücksichtigt werden. Das Dokument EP 3 636 118 A1 offenbart ein System und Verfahren zur Zubereitung von Lebensmitteln mit einem Grundgerät und einer Steuereinrichtung.

Dadurch kann zwar eine Liste von Zubereitungsvorschriften einem Nutzer vorgeschlagen werden, die sich für die Zubereitung von tatsächlich vorhandenen Lebensmitteln eignen. Allerdings können trotzdem Zubereitungsvorschriften aus der vorgeschlagenen Liste unzutreffend sein, insbesondere wenn für einen entsprechenden Zubereitungsvorgang angegebene Zubehörteile nicht vorhanden sind oder wenn das erzielte Gericht für die aktuelle Jahreszeit nicht passend ist. Darüber hinaus wird mit den bekannten Lösungen der Nutzer häufiger in der Lage versetzt, eine identische oder ähnliche Angabe wiederholt zu tätigen, um ein beliebtes Gericht zuzubereiten oder ein unbeliebtes Gericht abzuwählen.

Vor diesem Hintergrund liegt der vorliegenden Erfindung die Aufgabe zu Grunde, bekannte System und Verfahren für die Zubereitung von Lebensmitteln zu verbessern, insbesondere die Nutzerfreundlichkeit zu erhöhen.

Die zuvor genannte Aufgabe wird erfindungsgemäß gelöst durch ein Verfahren zum Betreiben eines Küchengeräts, bei dem ein Anordnungszustand eines Küchengeräts erfasst wird, bei dem mindestens eine Nutzerinformation bereitgestellt wird, bei dem mindestens eine Zubereitungsvorschrift in Abhängigkeit von dem Anordnungszustand des Küchengeräts und von der mindestens einen Nutzerinformation automatisch ausgewählt wird, und bei dem die mindestens eine ausgewählte Zubereitungsvorschrift bereitgestellt wird.

Die zuvor genannte Aufgabe wird erfindungsgemäß weiterhin durch ein System zur Zubereitung von Lebensmitteln, mit einem Grundgerät, mit mindestens einem Zubehörteil, mit einer Sensoreinrichtung, mit einer Steuereinrichtung, mit einem Speichermedium für eine Datenbank, und mit einer Kommunikationsschnittstelle, wobei die Datenbank mindestens eine Nutzerinformation und mindestens eine vordefinierte Zubereitungsvorschrift aufweist, dadurch gelöst, dass die Sensoreinrichtung dazu eingerichtet ist, einen Anordnungszustand des Grundgeräts mit dem mindestens einen Zubehörteil zu erfassen, dass die Steuereinrichtung dazu eingerichtet ist, mindestens eine Nutzerinformation aus der Datenbank des Speichermediums abzurufen, dass die Steuereinrichtung dazu eingerichtet ist, mindestens eine vordefinierte Zubereitungsvorschrift aus der Datenbank des Speichermediums in Abhängigkeit von dem erfassten Anordnungszustand des Küchengeräts und von der mindestens einen abgerufenen Nutzerinformation auszuwählen, und dass die Kommunikationsschnittstelle dazu eingerichtet ist, die mindestens eine ausgewählte Zubereitungsvorschrift bereitzustellen.

Die zuvor genannte Aufgabe wird erfindungsgemäß weiterhin gelöst durch ein Computerprogramm mit Anweisungen, die, wenn sie durch ein System gemäß der vorliegenden Offenbarung ausgeführt werden, das System veranlasst, ein Verfahren gemäß der vorliegenden Offenbarung durchzuführen.

Die zuvor genannte Aufgabe wird erfindungsgemäß weiterhin gelöst durch eine Steuereinrichtung mit einem Prozessor und mit einem Speichermedium, wobei das Speichermedium ein Computerprogramm gemäß der vorliegenden Offenbarung aufweist.

Mit dem System, dem Verfahren, dem Computerprogramm und der Steuereinrichtung werden Parameter, die einen Einfluss auf eine Auswahl einer Zubereitungsvorschrift haben können, erfasst bzw. abgerufen und bei der automatisierten Auswahl von Zubereitungsvorschriften berücksichtigt. Somit wird der Aufwand, beispielsweise aufgrund vermehrter Nutzerangaben, seitens des Nutzers verringert und die Führung durch die Bedienungsmenüs beschleunigt bzw. vereinfacht. Des Weiteren werden Fehlbedienungen und unnötige Einschränkungen der Systemfunktionalitäten verhindert. Insgesamt wird die Nutzerfreundlichkeit erhöht und der Einsatz des Systems wird gezielt an individuellen Eigenschaften jedes Nutzers adäquat angepasst.

Ein Anordnungszustand betrifft eine Zusammenstellung von Bauteilen eines Küchengeräts. Dabei kann ein Anordnungszustand eine Information über das Vorhandensein eines Zubehörteils, wobei das Fehlen eines Zubehörteils eine Information über ein Vorhandensein ist, eine Information über eine Position eines Zubehörteils relativ zum Grundgerät, eine Position eines Zubehörteils relativ zu einem weiteren Zubehörteil, eine Information über einen Verbindungszustand eines Zubehörteils mit dem Grundgerät, eine Information über einen Verbindungszustand eines Zubehörteils mit einem weiteren Zubehörteil, eine Information über ein Zubehörteiltyp, wie zum Beispiel Schneide-, Rühr-, Koch-, Wiege-, Schäl-, Gar-, Dampf- oder Abdeckungseinheit, eine Herkunftsinformation, wie Herstelleridentität, Herstellungszeitpunkt, Herstellungsort, eine Authentifizierungsinformation, eine Identifikationsnummer, wie zum Beispiel eine Seriennummer oder einen Universally Unique Identifier (UUID) aufweisen, wobei diese Liste nicht abschließend ist.

Ein Beispiel für einen Anordnungszustand ist eine Information über das Vorhandensein eines Grundgeräts und eines Aufnahmegefäßes. Ein weiteres Beispiel ist eine Information über das Vorhandensein eines Aufnahmegefäßes und einer Dampfeinheit.

Ein weiteres Beispiel für ein Anordnungszustand ist eine Information über ein Vorhandensein eines Zubehörs (z.B. Spatel) in der Nähe des Grundgerätes. Ein weiteres Beispiel ist eine Information über ein Vorhandensein eines Zubehörs, das in einem Garkorb angeordnet ist, wobei der Garkorb an das Grundgerät gehalten ist, wobei ein NFC Tag des Zubehörs durch eine Erfassungseinrichtung des Garkorbs erfasst und an das Grundgerät weitergleitet wird, so dass die Nähe des Zubehörs festgestellt wird.

Eine Nutzerinformation betrifft eine Eigenschaft eines Nutzers und / oder eine vergangene Nutzung des Systems durch einen Nutzer. Dabei kann die Nutzerinformation eine Information über eine Essensgewohnheit, eine Information über eine Nutzervorliebe, eine Information über eine biologische Eigenschaft wie eine Allergie, ein Alter, einen Blutwert, ein Gewicht, eine Angabe als Vegetarier, eine Information über eine länderspezifische Essenskultur, eine Information über eine Diät, eine Information über eine Zubereitungshistorie, eine Information über eine Wiederholung eines Zubereitungsvorgangs in der Vergangenheit, eine Information über eine Häufigkeit einer Verwendung eines Kochmodus oder eines Kochrezepts, eine Information über eine bevorzugte Zubereitungsart, eine Information über eine bevorzugte Zubereitungsvorschrift, eine Information über ein Kochverhalten, eine Information über eine Kochpräferenz, eine Information über einen Begabungsgrad, eine Information über eine Personenzahl, eine Information über eine Altersstruktur, eine Information über eine Portionsgröße, eine Information über bestimmte Zubehörteile, eine Information über ein bevorzugtes Lebensmittel, eine Information über eine Nutzungshäufigkeit eines Zubehörteils aufweisen, wobei diese Liste nicht abschließend ist.

Die Nutzerinformation oder ein Teil davon kann mit weiteren Informationen verknüpft oder zugeordnet sein. So kann beispielsweise eine Information über ein bevorzugtes Lebensmittel mit einer Jahreszeit / Monat oder mit einer Angabe über eine Zeitspanne am Tag oder mit einer Angabe über einem Wochentag verknüpft sein.

Eine Nutzerinformation kann das Ergebnis einer vergangenen Erfassung und Teil einer durch sukzessives Erfassen zusammengestellten Nutzungshistorie sein, wobei die Nutzungshistorie im Laufe der Zeit dynamisch entsprechend neuen Erfassungsergebnissen ergänzt oder angepasst wird. Alternativ oder zusätzlich kann die Nutzerinformation der Inhalt einer Nutzereingabe sein, die im Kontext einer aktuellen Nutzung des Systems oder im Kontext einer vergangenen Nutzung des Systems erfasst wurde.

Vorzugsweise ist die Nutzerinformation Teil eines Nutzerprofils, das in der Datenbank des Speichermediums hinterlegt ist. Das Nutzerprofil kann als Reaktion auf ein Erkennen oder Identifizieren eines Nutzers abgerufen werden und die darin enthaltenen Informationen für die automatische Auswahl einer Zubereitungsvorschrift bereitgestellt werden.

Bei der Zubereitungsvorschrift handelt es sich insbesondere um mindestens einen Zubereitungsparameter oder Sollwert, der einen Zubereitungsvorgang oder einen erzielten Zustand für ein Lebensmittels betrifft. Ein solcher Zubereitungsparameter kann für eine der folgenden Größen gegeben sein: Lufttemperatur, Backzeit, Ruhezeit, eine Information über eine Uhrzeit, bei der ein Zubereitungsvorgang anfangen oder enden soll, Abstand zu einem Heizelement, Höhe für einen Gargutträger, Luftfeuchtigkeit, Lebensmittelinnentemperatur, Lebensmittelaußentemperatur, Lebensmittelformgebung, Lebensmittelfeuchte, Bräunungsgrad, Lebensmittelgewicht, Lebensmittelvolumen, Packdichte von Lebensmitteleinheiten auf einem Gargutträger, eine Angabe über sukzessive Garzeiten, bei denen eine vorbestimmte Gartemperatur eingehalten werden soll, eine Zutatenmischung, ein Gewicht, ein Volumen, wobei diese Liste nicht abschließend ist. Vorzugsweise ist mindestens eine Zubereitungsvorschrift zumindest vorübergehend auf dem Speichermedium der Steuereinrichtung gespeichert.

Unter dem Begriff Küchengerät werden Geräte verstanden, die dazu eingerichtet sind, den Zustand eines Lebensmittels zu ändern. Dazu zählen zum Beispiel Geräte, durch die der Zustand eines Lebensmittels von einem rohen Zustand zu einem für einen Verzehr fertigen Zustand geändert wird, wie zum Beispiel beim Garen oder Backen. Unter dem Begriff Küchengerät werden insbesondere Geräte verstanden, die zum privaten Einsatz im Rahmen eines Haushalts vorgesehen sind. Vorzugsweise weist ein Küchengerät ein Grundgerät auf, mit dem separate Funktionsteile zusammenwirken, um je nach erzieltem Gericht, Getränk oder ähnliches ein Lebensmittel zu verarbeiten. Diese Funktionsteile werden in der Regel durch Küchengerätanbieter als Zubehörteile verkauft, zum Beispiel als Deckel, Schneide-, Zerkleinerungs-, Messer- oder Rühreinheit.

Ein Grundgerät im Sinne der vorliegenden Erfindung ist vorzugsweise als Basis für den Einsatz von Zubehörteilen. Das Grundgerät weist ein Gehäuse auf, in dem ein Elektromotor zum Antrieb von Zubehörteilen angeordnet ist.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Lebensmittelaufnahme-, Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Die Sensoreinrichtung ist dazu eingerichtet, einen Anordnungszustand des Grundgeräts mit dem mindestens einen Zubehörteil zu erfassen. Hierzu kann die Sensoreinrichtung zum Beispiel als optischer Sensor wie Kamera oder Barcode-Lesegerät, als Magnet, als RFID-Transponder oder Transceiver, als NFC-Modul, als Bluetooth-Modul, als mechanischer Stecker, als elektrischer Stecker oder als Funkelement ausgebildet sein, wobei diese Liste nicht abschließend ist. Das System kann eine Mehrzahl an Sensoreinrichtungen aufweisen, wobei die Erfassungsergebnisse der jeweiligen Sensoreinrichtung zusammengebracht werden können, um einen Anordnungszustand zu bilden.

Vorzugsweise weist die Steuereinrichtung ein Kommunikationsmodul auf, das zum Weiterleiten von Steuerungsanweisungen, die sich aus einem Ausführen des Computerprogramms ergeben, an weitere Vorrichtungen oder Teile des Küchengeräts bzw. des Systems zu übermitteln, vorgesehen ist, wie zum Beispiel an einen externen Server, an einen Elektromotor des Grundgeräts, an ein Heizelement des Grundgeräts oder eines Zubehörteils, an ein weiteres Küchengerät oder an eine externe Nutzerschnittstelle.

Das Speichermedium des Systems kann in der Steuereinrichtung integriert sein. Alternativ kann das Speichermedium Teil einer gegenüber dem Küchengerät bzw. dem Grundgerät externen Einheit sein, wie zum Beispiel eines externen Servers, einer externen Nutzerschnittstelle wie ein Smartphone oder eines tragbares Speichermediums wie ein USB-Sick.

Eine Zubereitungsvorschrift wird in Abhängigkeit von dem Anordnungszustand des Küchengeräts und von der mindestens einen Nutzerinformation automatisch ausgewählt bzw. die Steuereinrichtung ist dazu eingerichtet, mindestens eine vordefinierte Zubereitungsvorschrift aus der Datenbank des Speichermediums in Abhängigkeit von dem erfassten Anordnungszustand des Küchengeräts und von der mindestens einen abgerufenen Nutzerinformation auszuwählen. Hierzu können der erfasste Anordnungszustand und die Nutzerinformation oder Werte, die diesen entsprechen, als Filterparameter verwendet werden, um zutreffende Zubereitungsvorschriften zu identifizieren und ggf. auszuwählen. Insbesondere kann die Steuereinrichtung den erfassten Anordnungszustand und die Nutzerinformation mit Zubereitungsparametern oder Angaben von mindestens einer Zubereitungsvorschrift vergleichen. Aus dem Ergebnis des Vergleichs kann die Steuereinrichtung bestimmen, für welche Zubereitungsvorschrift sich die geringsten Unterschiede zwischen dem erfassten Anordnungszustand bzw. die Nutzerinformation und entsprechenden Zubereitungsparametern oder Angaben ergibt. Es können mehrere Zubereitungsvorschriften ausgewählt und als Liste zusammengestellt werden.

Die mindestens eine ausgewählte Zubereitungsvorschrift wird bereitgestellt bzw. die Kommunikationsschnittstelle ist dazu eingerichtet, die mindestens eine ausgewählte Zubereitungsvorschrift bereitzustellen. Die Kommunikationsschnittstelle kann als optische, haptische, elektronische Schnittstelle ausgebildet sein. Beispiele für eine Kommunikationsschnittstelle sind ein berührungsempfindlicher Bildschirm, ein Mikrophon, ein Smartphone, ein Tablet, wobei diese Liste nicht abschließend ist. Ein besonderes Beispiel ist für eine Kommunikationsschnittstelle ist eine Anordnung eines mit einem berührungsempfindlichen Bildschirm und mit einem Drehknopf. Alternativ oder zusätzlich kann die Kommunikationsschnittstelle für eine Kommunikationsverbindung mit einer weiteren Einheit ausgebildet sein, wie zum Beispiel mit einem Smartphone oder einem Server, und die mindestens eine ausgewählte Zubereitungsvorschrift wird der weiteren Einheit durch die Kommunikationsschnittstelle zur weiteren Verwendung oder Verwertung bereitgestellt.

Im Folgenden werden verschiedene Ausführungsformen des Verfahrens, des Systems, des Computerprogramms und der Steuereinrichtung beschrieben, wobei die einzelnen Ausführungsformen jeweils unabhängig voneinander für das Verfahren, das System, das Computerprogramm und die Steuereinrichtung gelten. Darüber hinaus können die einzelnen Ausführungsformen beliebig miteinander kombiniert werden.

Bei dem erfindungsgemäßen Verfahren wird der erfasste Anordnungszustand des Küchengeräts mit mindestens einem vordefinierten Referenzzustand verglichen, wobei dem mindestens einen Referenzzustand mindestens eine Einsatzeignung zugeordnet ist, mindestens eine Einsatzeignung in Abhängigkeit des Vergleichsergebnisses wird bereitgestellt, und die mindestens eine bereitgestellte Einsatzeignung wird bei der automatischen Auswahl der mindestens einen Zubereitungsvorschrift berücksichtigt.

Bei einer entsprechenden Ausführungsform des Systems ist vorgesehen, dass die mindestens eine vordefinierte Zubereitungsvorschrift der Datenbank mindestens ein Einsatzerfordernis aufweist, dass die Datenbank mindestens einen vordefinierten Referenzzustand aufweist, wobei jedem Referenzzustand mindestens eine Einsatzeignung zugeordnet ist, dass die Steuereinrichtung dazu eingerichtet ist, einen erfassten Anordnungszustand des Küchengeräts mit dem mindestens einen vordefinierten Referenzzustand zu vergleichen und mindestens eine Einsatzeignung in Abhängigkeit des Vergleichsergebnisses bereitzustellen, und dass die Steuereinrichtung dazu eingerichtet ist, die mindestens eine bereitgestellte Einsatzeignung mit mindestens einem Einsatzerfordernis abzugleichen und mindestens eine Zubereitungsvorschrift in Abhängigkeit von dem Abgleichergebnisses auszuwählen.

Somit kann eine Eignung eines tatsächlich vorliegenden Anordnungszustandes eines Systems bzw. eines Küchengeräts zur Durchführung bestimmter Zubereitungsschritte erkannt werden. So kann eine Zubereitungsvorschrift dann automatisch an den tatsächlichen Anordnungszustand ausgewählt werden. Dementsprechend wird die Bedienung des Systems für den Nutzer vereinfacht und zuverlässiger gestaltet, indem die durch das System vorgeschlagenen Zubereitungsvorschriften für die eingesetzten Zubehörteile zutreffend sind.

Ein Referenzzustand entspricht einer vordefinierten Zusammenstellung von Bauteilen eines Küchengeräts. Vorzugsweise werden Referenzzustände durch den Hersteller des Küchengeräts bestimmt und in der Datenbank des Speichermediums der Steuereinrichtung des Systems hinterlegt. Alternativ oder zusätzlich kann ein Referenzzustand durch einen Nutzer definiert und in der Datenbank hinterlegt werden, beispielsweise wenn das System durch ein neues Zubehörteil ergänzt wird. Vorzugsweise sind der Anordnungszustand und der mindestens eine Referenzzustand mit vergleichbaren Größen ausgedrückt, beispielsweise Zahlen oder Kennzeichen. So können ein Anordnungszustand und ein Referenzzustand mehrere Angaben aufweisen, die einem Kennzeichen mehrerer Bauteile eines Küchengeräts entsprechen oder zugeordnet sind.

Jedem Referenzzustand ist mindestens eine Einsatzeignung zugeordnet. Eine Einsatzeignung beschreibt eine Funktion oder einen Zubereitungsschritt, für die bzw. für den ein Zubehörteil oder eine Zusammensetzung mehrerer Zubehörteile ausgebildet ist. Eine Anordnung eines Aufnahmegefäßes mit einer Schneideeinheit eignet sich beispielsweise für die Funktion "Zerkleinern von Lebensmitteln", so dass dem Referenzzustand, der dieser Anordnung entspricht, die Einsatzeignung "Zerkleinern" zugordnet ist. Ist das Aufnahmegefäß dieser Anordnung zusätzlich zu Erwärmen ausgebildet, so ist dem Referenzzustand, der dieser Anordnung entspricht, zusätzliche die Einsatzeignung "Erwärmen" zugordnet. Ein weiteres Beispiel ist die Einsatzeignung "Schälen" für eine Anordnung eines Aufnahmegefäßes mit einer Schäleinheit.

Die mindestens eine vordefinierte Zubereitungsvorschrift der Datenbank weist mindestens ein Einsatzerfordernis auf. Ein Einsatzerfordernis beschreibt mindestens ein Erfordernis, das einen Zubereitungsschritt eines Zubereitungsvorgangs aufweist. So ist zum Beispiel für die Zubereitung von Marmelade vorgesehen, dass Lebensmittel erwärmt werden, dann weist die entsprechende Zubereitungsvorschrift das Einsatzerfordernis "Erwärmen" auf. Vorzugsweise ist ein Einsatzerfordernis als Pendant einer Einsatzeignung ausgebildet, so dass ein Einsatzerfordernis einer Zubereitungsvorschrift mit einer Einsatzeignung eines Referenzzustands verglichen werden kann.

Unterschiedliche Referenzzustände können derselben Einsatzeignung zugeordnet sein, insbesondere wenn unterschiedliche Zusammensetzungen unterschiedlicher oder gleicher Zubehörteile insgesamt die gleiche Eignung ergeben. Beschreibt zum Beispiel ein erster Referenzzustand eine Anordnung mit einem Aufnahmegefäß und mit einer Schneideeinheit und beschreibt ein zweiter Referenzzustand eine Anordnung mit einem Aufnahmegefäß, mit einer Schneideeinheit und mit einem Deckel, dann ist die Einsatzeignung "Zerkleinern" sowohl dem ersten Referenzzustand als auch dem zweiten Referenzzustand zugeordnet. Als weiteres Beispiel kann ein dritter Referenzzustand eine Anordnung mit einem Aufnahmegefäß und mit einem Garkorb beschreiben und ein vierter Referenzzustand eine Anordnung mit einem Aufnahmegefäß und mit einer Gargutdampfeinheit beschreiben, so ist die Einsatzeignung "Dampfgaren" sowohl dem dritten Referenzzustand als auch dem vierten Referenzzustand zugeordnet. Dadurch kann eine Zubereitungsvorschrift einem Nutzer zutreffend vorgeschlagen werden, auch wenn unterschiedliche Zubehörteile zur Verfügung stehen.

Bei einer Ausführungsform des Verfahrens wird mindestens eine Lebensmittelinformation erfasst, und die mindestens eine Zubereitungsvorschrift wird zusätzlich in Abhängigkeit von der mindestens einen Lebensmittelinformation automatisch ausgewählt.

Bei einer entsprechenden Ausführungsform des Systems ist vorgesehen, dass die mindestens eine vordefinierte Zubereitungsvorschrift der Datenbank mindestens eine Lebensmittelangabe aufweist, dass eine weitere Sensoreinrichtung vorgesehen ist, die zum Erfassen mindestens einer Lebensmittelinformation eingerichtet ist, und dass die Steuereinrichtung dazu eingerichtet ist, eine erfasste Lebensmittelinformation mit mindestens einer Lebensmittelangabe einer Zubereitungsvorschrift abzugleichen und mindestens eine Zubereitungsvorschrift in Abhängigkeit von dem Abgleichergebnisses auszuwählen.

Somit lässt sich eine Zubereitungsvorschrift einem Nutzer zur Verfügung stellen, die auch für tatsächlich vorhandene Lebensmittel zutreffend ist. Das Berücksichtigen der mindestens einen Lebensmittelinformation erhöht die Anzahl an Filterparameter zum Auswählen einer Zubereitungsvorschrift in einer Liste von vordefinierten Zubereitungsvorschriften, so dass insgesamt die automatische Auswahl weiter verfeinert und dadurch auch die Genauigkeit der Anpassung der Auswahl an die tatsächliche Situation erhöht wird.

Eine Lebensmittelinformation betrifft eine innewohnende Eigenschaft, einen Zustand und / oder das Vorhandensein eines Lebensmittels. Beispiele für eine Lebensmittelinformation sind: eine Lebensmittelart, eine Lebensmittelsorte, eine Farbe, ein Gewicht, ein Volumen, eine Temperatur, ein Mischungsverhältnis unterschiedlicher Zutaten, eine Viskosität, einen Feuchtigkeitsgehalt, eine Information darüber, ob ein Lebensmittel bereits verarbeitet wurde, eine Information darüber, ob ein Lebensmittel zerkleinert oder geschnitten ist, wobei diese Liste nicht abschließend ist.

Die Sensoreinrichtung zum Erfassen einer Lebensmittelinformation kann als ein Sensor zum direkten Erfassen einer Lebensmittelinformation, wie zum Beispiel ein optischer Sensor, ein Waagemodul, als Sensor für ein Drehmoment und / oder ein Thermometer ausgebildet sein. Alternativ oder zusätzlich kann die Sensoreinrichtung zum Erfassen einer Lebensmittelinformation als Nutzereingabe ausgebildet sein.

Eine Lebensmittelangabe betrifft mindestens ein Lebensmittel, das bei einem Zubereitungsvorgang verwendet werden soll oder werden kann. Vorzugsweise ist eine Lebensmittelangabe als Pendant einer Lebensmittelinformation ausgebildet, so dass eine Lebensmittelangabe einer Zubereitungsvorschrift mit einer erfassten Lebensmittelinformation verglichen werden kann. Mehrere Lebensmittelangaben können bei einer Zubereitungsvorschrift kombiniert sein, beispielsweise ein Gewicht und eine Lebensmittelsorte, also beispielsweise "500g Quark".

Bei einer Ausführungsform des Verfahrens wird mindestens eine Umgebungsinformation erfasst und die mindestens eine Zubereitungsvorschrift wird zusätzlich in Abhängigkeit von der mindestens einen Umgebungsinformation automatisch ausgewählt.

Bei einer entsprechenden Ausführungsform des Systems ist vorgesehen, dass die mindestens eine vordefinierte Zubereitungsvorschrift der Datenbank mindestens eine Umgebungsangabe aufweist, dass eine weitere Sensoreinrichtung vorgesehen ist, die zum Erfassen mindestens einer Umgebungsinformation eingerichtet ist, und dass die Steuereinrichtung dazu eingerichtet ist, eine erfasste Umgebungsinformation mit mindestens einer Umgebungsangabe einer Zubereitungsvorschrift abzugleichen und mindestens eine Zubereitungsvorschrift in Abhängigkeit von dem Abgleichergebnis auszuwählen.

Auch das zusätzliche Berücksichtigen einer Umgebungsinformation erhöhte die Erfolgschancen des automatischen Auswahlverfahrens bzw. die Wahrscheinlichkeit, dass die Auswahl einer Zubereitungsvorschrift für die tatsächliche Situation zutreffend ist, verbessert wird. Dadurch ergibt sich eine gesteigerte Nutzungsfreundlichkeit.

Ein Umgebungsinformation betrifft eine Eigenschaft des Kontextes, in dem sich das System oder ein Küchengerät befindet. Beispiele für eine Umgebungsinformation sind eine Zeitangabe wie Uhrzeit, Wochentag, Jahreszeit, eine Außentemperatur, eine Wetterangabe, eine geographische Position, eine Angabe über eine örtliche Kochkultur, wobei diese Liste nicht abschließend ist.

Die Sensoreinrichtung zum Erfassen mindestens einer Umgebungsinformation kann als optischer Sensor, als Thermometer, als Waage, als Stoppuhr, als Kommunikationsschnittstelle zum Datentransfer mit einem Server ausgebildet sein. Alternativ oder zusätzlich kann die Sensoreinrichtung zum Erfassen einer Umgebungsinformation als Nutzereingabe ausgebildet sein.

Bei einer Ausführungsform des Verfahrens wird mindestens eine angepasste Zubereitungsvorschrift erzeugt, indem mindestens ein Zubereitungsparameter einer ausgewählten Zubereitungsvorschrift an mindestens ein Element der folgenden Liste oder an eine Kombination hiervon angepasst wird: einen Anordnungszustand, einen Referenzzustand, eine Einsatzeignung, eine Nutzerinformation, eine Lebensmittelinformation, eine Umgebungsinformation.

Bei einer entsprechenden Ausführungsform des Systems ist vorgesehen, dass die Steuereinrichtung dazu eingerichtet ist, eine angepasste Zubereitungsvorschrift zu erzeugen, wobei die angepasste Zubereitungsvorschrift mindestens einen Zubereitungsparameter aufweist, das an mindestens ein Element der folgenden Liste oder eine Kombination hiervon angepasst ist: einen Anordnungszustand, eine Nutzerinformation, eine Lebensmittelinformation, eine Umgebungsinformation.

Dadurch kann das Spektrum an Zubereitungsvorschriften bzw. an Verwendungsmöglichkeiten des Systems oder eines Küchengeräts erweitert werden und zugleich die Zubereitungsvorschrift, die einem Nutzer vorgeschlagen wird, akkurat an den tatsächlichen Kontext des Systems bzw. des Küchengeräts angepasst werden.

Bei der Anpassung kann beispielsweise eine Skalierung eines Wertes, ein Austauschen einer Angabe durch eine andere Angabe, ein Einführen eines zusätzlichen Zubereitungsschrittes, ein Überspringen eines Zubereitungsschrittes erfolgen.

Bei einer Ausführungsform des Verfahrens wird die mindesten eine ausgewählte Zubereitungsvorschrift als Empfehlung ausgegeben und ein Zubereitungsvorgang entsprechend einer der mindestens einen ausgewählten Zubereitungsvorschrift mithilfe des Küchengeräts durchgeführt, oder die mindestens eine angepasste Zubereitungsvorschrift wird als Empfehlung ausgegeben und ein Zubereitungsvorgang entsprechend einer der mindestens einen angepassten Zubereitungsvorschrift wird mithilfe des Küchengeräts durchgeführt.

Bei einer entsprechenden Ausführungsform des Systems ist vorgesehen, dass die Kommunikationsschnittstelle dazu eingerichtet ist, eine Nutzereingabe mit einer Information über eine Nutzerwahl einer bereitgestellten Zubereitungsvorschrift zu erfassen und an die Steuereinrichtung weiterzuleiten, und dass die Steuereinrichtung dazu eingerichtet ist, das Grundgerät und das mindestens eine Zubehörteil entsprechend der Nutzerwahl zu steuern.

Dadurch kann einem Nutzer eine Liste an für den Kontext des Systems bzw. des Küchengeräts zutreffenden Zubereitungsvorschriften zur Verfügung gestellt werden, und anschließend ein Zubereitungsvorgang durchgeführt werden, der einer Auswahl des Nutzers entspricht.

Die Empfehlung kann als gesonderter Bereich einer graphischen Darstellung mit Hervorhebungen bereitgestellt werden. Dabei kann eine Liste von Zubereitungsvorschriften mit einer Reihenfolge bereitgestellt werden, die einer Priorisierung der einzelnen Zubereitungsvorschriften entspricht. Die Priorisierung kann sich aus einer Wichtung der einzelnen ausgewählten Zubereitungsvorschriften beim Vergleichen mit Referenzgrößen wie zum Beispiel aus dem Vergleich einer Lebensmittelinformation mit einer Lebensmittelangabe ergeben. Somit wird der Nutzer in eine Lage versetzt, dass eine Entscheidung leichter getroffen werden kann.

Bei einer Ausführungsform des Verfahrens bzw. bei einer entsprechenden Ausführungsform des Systems kann vorgesehen sein, dass das Bedienungsmenü des Systems durch die Steuereinrichtung automatisch an eine ausgewählte Zubereitungsvorschrift und / oder an eine erfasste Information, insbesondere an einen erfassten Anordnungszustand angepasst wird. So können beispielsweise Menüabkürzungen, sogenannte "Short-Cuts", bereitgestellt werden, um an für die ausgewählte Zubereitungsvorschrift zutreffende Funktionen des Systems oder Küchengeräts zu gelangen. Dadurch werden die Bedienungsmöglichkeiten des Systems bzw. des Küchengeräts dynamisch angepasst und somit sowohl die Nutzerfreundlichkeit als auch die Erfolgschancen eines Zubereitungsvorgangs erhöht.

Weitere Merkmale und Vorteile des Verfahrens, des Systems, des Computerprogramms und der Steuereinrichtung ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel für ein System zur Zubereitung von Lebensmitteln,
- Fig. 2: ein weiteres Ausführungsbeispiel für ein System zur Zubereitung von Lebensmitteln,
- Fig. 3: ein Ausführungsbeispiel für ein Verfahren zum Betreiben eines Küchengeräts und
- Fig. 4: ein weiteres Ausführungsbeispiel für ein Verfahren zum Betreiben eines Küchengeräts.

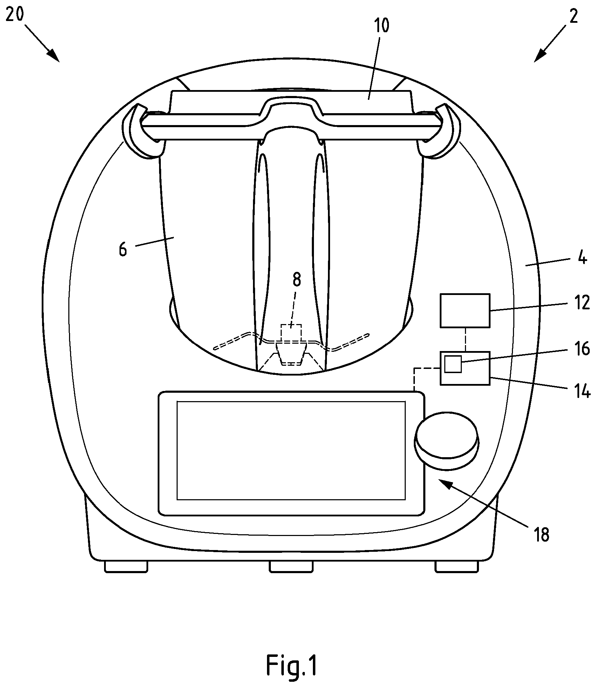

Fig. 1 zeigt ein erstes Ausführungsbeispiel für ein System 2 zur Zubereitung von Lebensmitteln. Das System 2 weist ein Grundgerät 4 und drei Zubehörteile 6, 8, 10 in Form eines Aufnahmegefäßes 6, einer Schneideeinheit 8 und eines Deckels 10 auf. Das System 2 weist ferner eine Sensoreinrichtung 12, eine Steuereinrichtung 14 mit einem Speichermedium 16 für eine Datenbank und eine Kommunikationsschnittstelle 18 auf.

Die Sensoreinrichtung 12 und die Steuereinrichtung 14 mit dem Speichermedium 16 sind in dem Gehäuse des Grundgeräts integriert. Die Kommunikationsschnittstelle 18 ist am Grundgerät angeordnet.

Das Grundgerät, das Aufnahmegefäß, die Schneideeinheit und der Deckel bilden zusammen ein Küchengerät 20.

In der Datenbank des Speichermediums 16 sind Nutzerprofile hinterlegt, die beim Auffahren der Steuereinrichtung 14, beim Begin einer Nutzung des Küchengeräts 20 oder im Laufe einer Nutzung des Küchengeräts 20 individuell via die Steuereinrichtung 14 abgerufen werden können. Die hinterlegten Nutzerprofile sind jeweils mit individualisierten Nutzerzugangsdaten verknüpft und weisen folgende Informationen auf:
- generelle Kochpräferenzen in Form von Präferenzen zu Rezepten und / oder Zutaten, beispielsweise "vegetarisch", "glutenfrei", "italienische Küche";
- Schwierigkeitsgrad für Zubereitungsvorschriften, die sich der Nutzer zutraut;
- Angaben über eine Personenzahl, die Altersstruktur, die Portionsgröße;
- eine Liste von oft verwendeten Zubereitungsarten, -vorschriften, - modi, wobei die Liste das Ergebnis eines Erfassens bzw. Verfolgens vergangener Nutzungen des Küchengeräts 20 ist;
- Nutzergewohnheiten mit Zeitangaben wie Wochentag und Uhrzeit;
- Identität von Zubehörteilen, die bereits verwendet worden sind und deren Nutzungshäufigkeit;
- Eigenschaften für individualisierte Zubehörteile, die einem Nutzer gehören, hier "grün" für das Zubehörteil "Spatel".

Ebenfalls in der Datenbank sind vordefinierte Zubereitungsvorschriften hinterlegt, die mit dem vorliegenden Küchengerätmodell durchführbar sind.

Die Kommunikationsschnittstelle 18 ist als berührungsempfindlicher Bildschirm ausgebildet und sowohl zur optischen Wiedergabe von durch die Steuereinrichtung 14 ausgewählten Zubereitungsvorschriften, von erfassten Informationen und Menüs, als auch zum Erfassen von Nutzereingaben eingerichtet.

Die Sensoreinrichtung 12 ist als NFC-Modul ausgebildet und zum Erfassen von NFC-Tags am Aufnahmegefäß, an der Schneideeinheit und am Deckel eingerichtet. So ist die Sensoreinrichtung 12 dazu eingerichtet, die Anordnung und die Zubehörteiltypen des Küchengeräts 20 in der dargestellten Konstellation zu erfassen.

Die Steuereinrichtung 14 ist dazu eingerichtet, die vordefinierten Zubereitungsvorschriften aus der Datenbank des Speichermediums 16 in Abhängigkeit von dem erfassten Anordnungszustand des Küchengeräts 20 und von dem abgerufenen Nutzerprofil und im Nutzerprofil enthaltenden Nutzerinformationen auszuwählen.

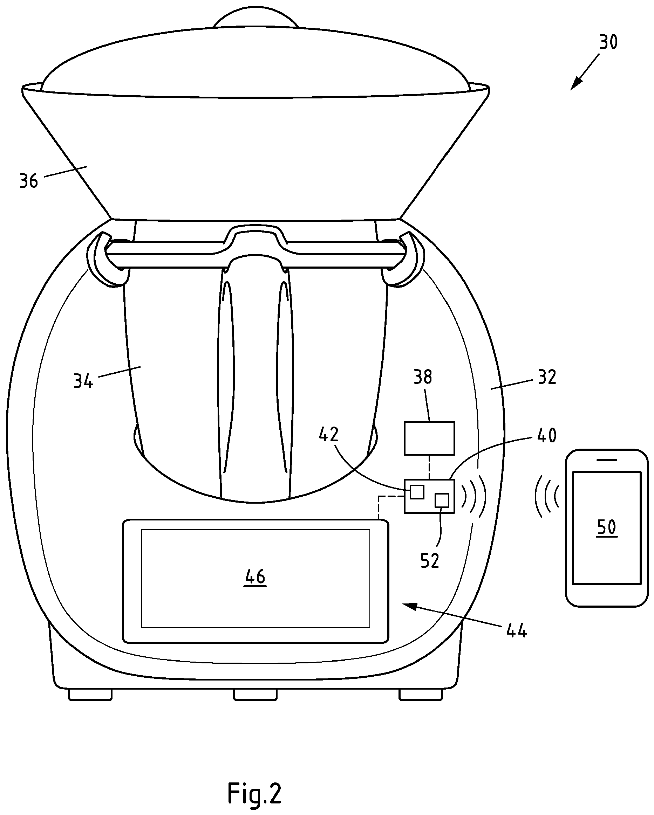

Fig. 2 zeigt ein weiteres Ausführungsbeispiel für ein System 30 zur Zubereitung von Lebensmitteln. Das System 30 weist ein Grundgerät 32 und zwei Zubehörteile in Form eines Aufnahmegefäßes 34 und einer Gargutdampfeinheit 36 auf. Das System 30 weist ferner eine Sensoreinrichtung 38, eine Steuereinrichtung 40 mit einem Speichermedium 42 für eine Datenbank und eine Kommunikationsschnittstelle 44 auf.

Die Sensoreinrichtung 38 und die Steuereinrichtung 40 mit dem Speichermedium 42 sind in dem Gehäuse des Grundgeräts 32 integriert. Die Kommunikationsschnittstelle 44 ist am Grundgerät 32 angeordnet.

Die Sensoreinrichtung 38 ist als NFC-Modul ausgebildet und zur Erkennung von Zubehörteilen durch Erfassen eines Positionierens der jeweiligen Zubehörteile am Grundgerät 32 eingerichtet.

Die Kommunikationsschnittstelle 44 ist als berührungsempfindlicher Bildschirm 46 ausgebildet und mit der Steuereinrichtung 40 verbunden. Die Steuereinrichtung 40 ist zum Datentransfer mit einem Smartphone 50 über eine kabellose Kommunikationsverbindung eingerichtet. Die Steuereinrichtung 40 ist ferner dazu ausgebildet, Informationen, insbesondere Zubereitungsvorschriften, sowohl der Kommunikationsschnittstelle 44 am Grundgerät 32 als auch dem Smartphone 50 zu übermitteln. Dadurch wird dem Nutzer die Möglichkeit verschafft, eine Nutzereingabe am Grundgerät 32 bzw. an der Kommunikationsschnittstelle 44 oder am Smartphone 50 zu tätigen.

Die Steuereinrichtung 40 weist eine interne Uhr 52 auf, die als Sensoreinrichtung zum Erfassen einer Umgebungsinformation in Form eines Zeitpunkts fungiert. Die Umgebungsinformation enthält dann eine Angabe über ein Datum, einen Wochentag und eine Uhrzeit. Darüber hinaus ist die Steuereinrichtung 40 dazu eingerichtet, eine durch die interne Uhr ausgegebene Uhrzeit für die Auswahl einer Zubereitungsvorschrift zu berücksichtigen.

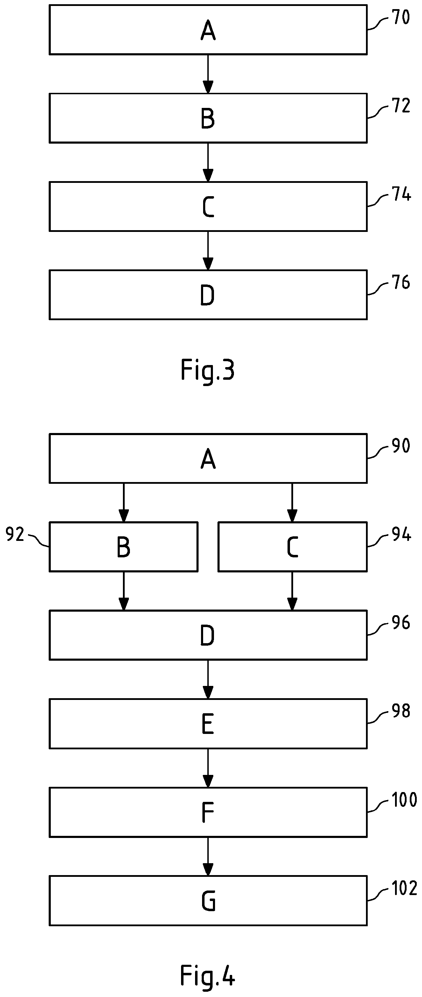

Fig. 3 zeigt ein Ausführungsbeispiel für ein Verfahren zum Betreiben eines Küchengeräts, wobei das Verfahren folgende Schritte aufweist: in einem ersten Schritt A 70 wird das Einsetzen mehrerer Zubehörteile am Grundgerät eines Küchengeräts und so ein Anordnungszustand (Grundgerät + Aufnahmegefäß + Schäleinheit) des Küchengeräts erfasst. In einem darauffolgenden Schritt B 72 wird eine Zubereitungshistorie aus einer Datenbank, die auf dem Speichermedium der Steuereinrichtung des Küchengeräts gespeichert ist, aufgerufen, wobei die Zubereitungshistorie die Nutzerinformation "Nutzer X schält oft Kartoffeln" enthält. In einem Schritt C 74 wird eine Liste von ausgewählten Zubereitungsvorschriften durch die Steuereinrichtung des Küchengeräts automatisch zusammengestellt, wobei die ausgewählten Zubereitungsvorschriften unter mehreren Zubereitungsvorschriften, die in der Datenbank hinterlegt sind, ausgewählt worden sind. Die ausgewählten Zubereitungsvorschriften entsprechen Zubereitungsvorgängen, die ein Schälen von Kartoffeln umfassen. In einem Schritt D 76 wird die Liste von ausgewählten Zubereitungsvorschriften einem Nutzer bereitgestellt.

Fig. 4 zeigt ein weiteres Ausführungsbeispiel für ein Verfahren zum Betreiben eines Küchengeräts. Ausgangspunkt für den Start des Verfahrens ist das Vorhandensein eines Grundgeräts und eines damit verbundenen Aufnahmegefäßes. Das Verfahren weist folgende Schritte auf: in einem Schritt A 90 wird das Aufsetzen eines Zubehörteils "Dampfeinheit" und somit den Anordnungszustand (Grundgerät + Aufnahmegefäß + Dampfeinheit) erfasst. Daraufhin werden die Schritte B 92 und C 94 durchgeführt. Bei Schritt B 92 wird die Nutzerinformation "Anna mag Fisch lieber dampfgegart" bereitgestellt und im Schritt C 94 wird die Lebensmittelinformation "250g Fisch" durch die Nutzereingabe erfasst. Im darauffolgenden Schritt D 96 verwendet die Steuereinrichtung die Nutzerinformation "Anna mag Fisch lieber dampfgegart" und die Lebensmittelinformation "250g Fisch" als Parameter zum Filtern von vordefinierten Zubereitungsvorschriften, um diejenigen auszuwählen, die eine Zubereitung von Fisch durch Dampfgaren betreffen. Sind bei den ausgewählten Zubereitungsvorschriften welche dabei, die eine Lebensmittelangabe "Fisch" mit einer geringeren Gewichtangabe aufweisen, dann skaliert die Steuereinrichtung die Lebensmittelangaben für die Zutat "Fisch" und für die weiteren Zutaten dieser Zubereitungsvorschrift, so dass 250g Fisch zubereitet werden. So passt die Steuereinrichtung ausgewählte Zubereitungsvorschriften an und erzeugt an die erfasste Lebensmittelinformation angepasste Zubereitungsvorschriften.

In einem Schritt E 98 leitet die Steuereinrichtung die ausgewählten und ggf. angepassten Zubereitungsvorschriften an die Kommunikationsschnittstelle weiter und die Kommunikationsschnittstelle stellt die Zubereitungsvorschriften als Empfehlung dar. Im Schritt F 100 wird eine Nutzereingabe erfasst, die eine Bestätigung enthält, dass eine der bereitgestellten Zubereitungsvorschriften erwünscht ist. Im Schritt G 102 steuert die Steuereinrichtung ein Heizmodul des Küchengeräts derart, dass ein Zubereitungsvorgang entsprechend der durch die Nutzereingabe bestätigten Zubereitungsvorschrift durchgeführt wird.

## Patentansprüche

1. Verfahren zum Betreiben eines Küchengeräts (20),
- bei dem ein Anordnungszustand eines Küchengeräts (20) erfasst wird,
- bei dem mindestens eine Nutzerinformation bereitgestellt wird,
- bei dem mindestens eine Zubereitungsvorschrift in Abhängigkeit von dem Anordnungszustand des Küchengeräts (20) und von der mindestens einen Nutzerinformation automatisch ausgewählt wird,
- bei dem die mindestens eine ausgewählte Zubereitungsvorschrift bereitgestellt wird, **dadurch gekennzeichnet, dass**
- der erfasste Anordnungszustand des Küchengeräts (20) mit mindestens einem vordefinierten Referenzzustand verglichen wird, wobei dem mindestens einen Referenzzustand mindestens eine Einsatzeignung zugeordnet ist,
- mindestens eine Einsatzeignung in Abhängigkeit des Vergleichsergebnisses bereitgestellt wird, und
- die mindestens eine bereitgestellte Einsatzeignung bei der automatischen Auswahl der mindestens einen Zubereitungsvorschrift berücksichtigt wird.

2. Verfahren nach Anspruch 1,
- bei dem mindestens eine Lebensmittelinformation erfasst wird, und
- bei dem die mindestens eine Zubereitungsvorschrift zusätzlich in Abhängigkeit von der mindestens einen Lebensmittelinformation automatisch ausgewählt wird.

3. Verfahren nach Anspruch 1 oder 2,
- bei dem mindestens eine Umgebungsinformation erfasst wird, und
- bei dem die mindestens eine Zubereitungsvorschrift zusätzlich in Abhängigkeit von der mindestens einen Umgebungsinformation automatisch ausgewählt wird.

4. Verfahren nach einem der Ansprüche 1 bis 3,
- bei dem mindestens eine angepasste Zubereitungsvorschrift erzeugt wird, indem mindestens ein Zubereitungsparameter einer ausgewählten Zubereitungsvorschrift an mindestens ein Element der folgenden Liste oder an eine Kombination hiervon angepasst wird: einen Anordnungszustand, einen Referenzzustand, eine Einsatzeignung, eine Nutzerinformation, eine Lebensmittelinformation, eine Umgebungsinformation.

5. Verfahren nach einem der Ansprüche 1 bis 4,
- bei dem die mindesten eine ausgewählte Zubereitungsvorschrift als Empfehlung ausgegeben und ein Zubereitungsvorgang entsprechend einer der mindestens einen ausgewählten Zubereitungsvorschrift mithilfe des Küchengeräts (20) durchgeführt wird, oder
- bei dem die mindestens eine angepasste Zubereitungsvorschrift als Empfehlung ausgegeben und ein Zubereitungsvorgang entsprechend einer der mindestens einen angepassten Zubereitungsvorschrift mithilfe des Küchengeräts (20) durchgeführt wird.

6. System (2, 30) zur Zubereitung von Lebensmitteln,
- mit einem Grundgerät (4, 32),
- mit mindestens einem Zubehörteil (6, 8, 10, 34, 36),
- mit einer Sensoreinrichtung (12, 38),
- mit einer Steuereinrichtung (14, 40),
- mit einem Speichermedium (16, 42) für eine Datenbank, und
- mit einer Kommunikationsschnittstelle (18, 44),
- wobei die Datenbank mindestens eine Nutzerinformation und mindestens eine vordefinierte Zubereitungsvorschrift aufweist,
**dadurch gekennzeichnet,**
- **dass** die Sensoreinrichtung (12, 38) dazu eingerichtet ist, einen Anordnungszustand des Grundgeräts mit dem mindestens einen Zubehörteil (6, 8, 10, 34, 36) zu erfassen,
- **dass** die Steuereinrichtung (14, 40) dazu eingerichtet ist, mindestens eine Nutzerinformation aus der Datenbank des Speichermediums (16, 42) abzurufen,
- **dass** die Steuereinrichtung (14, 40) dazu eingerichtet ist, mindestens eine vordefinierte Zubereitungsvorschrift aus der Datenbank des Speichermediums (16, 42) in Abhängigkeit von dem erfassten Anordnungszustand des Küchengeräts (20) und von der mindestens einen abgerufenen Nutzerinformation auszuwählen,
- **dass** die Kommunikationsschnittstelle (18, 44) dazu eingerichtet ist, die mindestens eine ausgewählte Zubereitungsvorschrift bereitzustellen,
- **dass** die mindestens eine vordefinierte Zubereitungsvorschrift der Datenbank mindestens ein Einsatzerfordernis aufweist,
- **dass** die Datenbank mindestens einen vordefinierten Referenzzustand aufweist, wobei jedem Referenzzustand mindestens eine Einsatzeignung zugeordnet ist,
- **dass** die Steuereinrichtung (14, 40) dazu eingerichtet ist, einen erfassten Anordnungszustand des Küchengeräts (20) mit dem mindestens einen vordefinierten Referenzzustand zu vergleichen und mindestens eine Einsatzeignung in Abhängigkeit des Vergleichsergebnisses bereitzustellen, und
- **dass** die Steuereinrichtung (14, 40) dazu eingerichtet ist, die mindestens eine bereitgestellte Einsatzeignung mit mindestens einem Einsatzerfordernis abzugleichen und mindestens eine Zubereitungsvorschrift in Abhängigkeit von dem Abgleichergebnisses auszuwählen.

7. System (2, 30) nach Anspruch 6,
**dadurch gekennzeichnet,**
- **dass** die mindestens eine vordefinierte Zubereitungsvorschrift der Datenbank mindestens eine Lebensmittelangabe aufweist,
- **dass** eine weitere Sensoreinrichtung (12, 38) vorgesehen ist, die zum Erfassen mindestens einer Lebensmittelinformation eingerichtet ist, und
- **dass** die Steuereinrichtung (14, 40) dazu eingerichtet ist, eine erfasste Lebensmittelinformation mit mindestens einer Lebensmittelangabe einer Zubereitungsvorschrift abzugleichen und mindestens eine Zubereitungsvorschrift in Abhängigkeit von dem Abgleichergebnisses auszuwählen.

8. System (2, 30) nach Anspruch 6 oder 7,
**dadurch gekennzeichnet,**
- **dass** die mindestens eine vordefinierte Zubereitungsvorschrift der Datenbank mindestens eine Umgebungsangabe aufweist,
- **dass** eine weitere Sensoreinrichtung (52) vorgesehen ist, die zum Erfassen mindestens einer Umgebungsinformation eingerichtet ist, und
- **dass** die Steuereinrichtung (14, 40) dazu eingerichtet ist, eine erfasste Umgebungsinformation mit mindestens einer Umgebungsangabe einer Zubereitungsvorschrift abzugleichen und mindestens eine Zubereitungsvorschrift in Abhängigkeit von dem Abgleichergebnisses auszuwählen.

9. System (2, 30) nach einem der Ansprüche 6 bis 8,
**dadurch gekennzeichnet,**
- **dass** die Steuereinrichtung (14, 40) dazu eingerichtet ist, eine angepasste Zubereitungsvorschrift zu erzeugen,
- wobei die angepasste Zubereitungsvorschrift mindestens einen Zubereitungsparameter aufweist, das an mindestens ein Element der folgenden Liste oder eine Kombination hiervon angepasst ist: einen Anordnungszustand, eine Nutzerinformation, eine Lebensmittelinformation, eine Umgebungsinformation.

10. System (2, 30) nach einem der Ansprüche 6 bis 9,
**dadurch gekennzeichnet,**
- **dass** die Kommunikationsschnittstelle (18, 44) dazu eingerichtet ist, eine Nutzereingabe mit einer Information über eine Nutzerwahl einer bereitgestellten Zubereitungsvorschrift zu erfassen und an die Steuereinrichtung (14, 40) weiterzuleiten, und
- **dass** die Steuereinrichtung (14, 40) dazu eingerichtet ist, das Grundgerät (4, 32) und das mindestens eine Zubehörteil (6, 8, 10, 34, 36) entsprechend der Nutzerwahl zu steuern.

11. Computerprogramm mit Anweisungen, die, wenn sie durch ein System (2, 30) nach einem der Ansprüche 6 bis 10 ausgeführt werden, das System (2, 30) veranlasst, ein Verfahren nach einem der Ansprüche 1 bis 5 durchzuführen.

12. Steuereinrichtung (14, 40) mit einem Prozessor und mit einem Speichermedium (16, 42), wobei das Speichermedium (16, 42) ein Computerprogramm nach Anspruch 11 aufweist.

## Claims

1. A method of operating a kitchen appliance (20),
- in which an arrangement state of a kitchen appliance (20) is detected,
- in which at least one piece of user information is provided,
- in which at least one preparation instruction is automatically selected depending on the arrangement state of the kitchen appliance (20) and on the at least one piece of user information,
- in which the at least one selected preparation instruction is provided,
**characterised in that**
- the detected arrangement state of the kitchen appliance (20) is compared with at least one predefined reference state, wherein at least one suitability for use is assigned to the at least one reference state,
- at least one suitability for use is provided depending on the result of the comparison, and
- the at least one provided suitability for use is taken into account in the automatic selection of the at least one preparation instruction.

2. The method according to claim 1,
- in which at least one piece of food information is detected, and
- in which the at least one preparation instruction is additionally selected automatically depending on the at least one food information.

3. The method according to claim 1 or 2,
- in which at least one piece of environmental information is detected, and
- in which the at least one preparation instruction is additionally selected automatically depending on the at least one piece of environmental information.

4. The method according to any one of claims 1 to 3,
- in which at least one adapted preparation instruction is generated by adapting at least one preparation parameter of a selected preparation instruction to at least one element of the following list or to a combination thereof: an arrangement state, a reference state, a suitability for use, piece of user information, piece of food information, piece of environmental information.

5. The method according to any one of claims 1 to 4,
- in which at least one selected recipe is output as a recommendation and a preparation process corresponding to one of the at least one selected recipe is carried out using the kitchen appliance (20), or
- in which the at least one adapted recipe is output as a recommendation and a preparation process corresponding to one of the at least one adapted recipe is carried out using the kitchen appliance (20).

6. A system (2, 30) for preparing food,
- having a base unit (4, 32),
- having at least one accessory (6, 8, 10, 34, 36),
- having a sensor equipment (12, 38),
- having a control equipment (14, 40),
- having a storage medium (16, 42) for a database, and
- having a communication interface (18, 44),
- wherein the database comprises at least one piece of user information and at least one predefined preparation instruction,
**characterised in**
- **that** the sensor equipment (12, 38) is configured to detect an arrangement state of the base unit with the at least one accessory (6, 8, 10, 34, 36),
- **that** the control equipment (14, 40) is configured to retrieve at least one piece of user information from the database of the storage medium (16, 42),
- **that** the control equipment (14, 40) is configured to select at least one predefined preparation instruction from the database of the storage medium (16, 42) depending on the detected arrangement state of the kitchen appliance (20) and on the at least one retrieved user information,
- **that** the communication interface (18, 44) is configured to provide the at least one selected preparation instruction,
- **that** the at least one predefined preparation instruction of the database comprises at least one requirement for use,
- **that** the database comprises at least one predefined reference state, wherein at least one suitability for use is assigned to each reference state,
- **that** the control device (14, 40) is configured to compare a detected arrangement state of the kitchen appliance (20) with the at least one predefined reference state and to provide at least one suitability for use depending on the result of the comparison, and
- **that** the control device (14, 40) is configured to match the at least one provided suitability for use with at least one requirement for use and to select at least one preparation instruction depending on the result of the match.

7. The system (2, 30) according to claim 6,
**characterised in that**
- that the at least one predefined preparation instruction of the database comprises at least one piece of food information,
- that a further sensor equipment (12, 38) is provided, which is configured to detect at least one piece of food information, and
- that the control equipment (14, 40) is configured to compare detected piece of food information with at least one piece of food information of a preparation instruction and to select at least one preparation instruction depending on the comparison result.

8. The system (2, 30) according to claim 6 or 7,
**characterised in that**
- that the at least one predefined preparation instruction of the database comprises at least one piece of environmental information,
- that a further sensor equipment (52) is provided, which is configured to detect at least one piece of environmental information, and
- that the control equipment (14, 40) is configured to compare the detected piece of environmental information with at least one piece of environmental information of a preparation instruction and to select at least one preparation instruction depending on the comparison result.

9. The system (2, 30) according to any one of claims 6 to 8,
**characterised in that**
- that the control equipment (14, 40) is configured to generate an adapted preparation instruction,
- wherein the adapted preparation instruction comprises at least one preparation parameter which is adapted to at least one element of the following list or a combination thereof: an arrangement state, a piece of user information, a piece of food information, a piece of environmental information.

10. The system (2, 30) according to any one of claims 6 to 9,
**characterised in that**
- **in that** the communication interface (18, 44) is configured to detect a user input containing information regarding a selection of a user of a provided preparation instruction and to forward it to the control equipment (14, 40), and
- that the control equipment (14, 40) is configured to control the base unit (4, 32) and the at least one accessory (6, 8, 10, 34, 36) in accordance with the selection of the user.

11. A computer program comprising instructions which, when executed by a system (2, 30) according to any one of claims 6 to 10, cause the system (2, 30) to perform a method according to any one of claims 1 to 5.

12. A control equipment (14, 40) comprising a processor and a storage medium (16, 42), wherein the storage medium (16, 42) contains a computer program according to claim 11.

## Revendications

1. Méthode pour faire fonctionner un appareil de cuisine (20),
- dans laquelle un état d'agencement d'un appareil de cuisine (20) est détecté,
- dans laquelle une ou plusieurs informations d'utilisateur sont fournies,
- dans laquelle une ou plusieurs recettes de préparation sont automatiquement sélectionnées en fonction de l'état d'agencement de l'appareil de cuisine (20) et de l'une ou plusieurs informations d'utilisateur,
- dans laquelle l'une ou plusieurs recettes de préparation sélectionnées sont fournies, **caractérisée en ce que**
- l'état d'agencement détecté de l'appareil de cuisine (20) est comparé à un ou plusieurs états de référence prédéfinis, où une ou plusieurs aptitudes d'utilisation sont attribuées à l'un ou plusieurs états de référence,
- une ou plusieurs aptitudes d'utilisation sont fournies en fonction du résultat de comparaison, et
- l'une ou plusieurs aptitudes d'utilisation fournies sont prises en compte lors de la sélection automatique de l'une ou plusieurs recettes de préparation.

2. Méthode selon la revendication 1,
- dans laquelle une ou plusieurs informations sur des aliments sont détectées, et
- dans laquelle l'une ou plusieurs recettes de préparation sont en outre automatiquement sélectionnées en fonction de l'une ou plusieurs informations sur des aliments.

3. Méthode selon la revendication 1 ou 2,
- dans laquelle une ou plusieurs informations d'environnement sont détectées, et
- dans laquelle l'une ou plusieurs recettes de préparation sont en outre automatiquement sélectionnées en fonction de l'une ou plusieurs informations d'environnement.

4. Méthode selon l'une des revendications 1 à 3,
- dans laquelle une ou plusieurs recettes de préparation adaptées sont générées en adaptant un ou plusieurs paramètres de préparation d'une recette de préparation sélectionnée à au moins un élément de la liste suivante ou à une combinaison de ceux-ci : un état d'agencement, un état de référence, une aptitude d'utilisation, une information d'utilisateur, une information sur des aliments, une information d'environnement.

5. Méthode selon l'une des revendications 1 à 4,
- dans laquelle l'une ou plusieurs recettes de préparation sélectionnées est fournie en tant que recommandation et un processus de préparation est effectué conformément à l'une des recettes de préparation sélectionnées à l'aide de l'appareil de cuisine (20), ou
- dans laquelle l'une ou plusieurs recettes de préparation adaptées est fournie en tant que recommandation et un processus de préparation est effectué conformément à l'une des recettes de préparation adaptées à l'aide de l'appareil de cuisine (20).

6. Système (2, 30) pour une préparation d'aliments,
- avec un appareil de base (4, 32),
- avec un ou plusieurs accessoires (6, 8, 10, 34, 36),
- avec un dispositif de détection (12, 38),
- avec un dispositif de commande (14, 40),
- avec un support de stockage (16, 42) pour une base de données, et
- avec une interface de communication (18, 44),
- où la base de données a une ou plusieurs informations d'utilisateur et une ou plusieurs recettes de préparation prédéfinies,
**caractérisé en ce,**
- **que** le dispositif de détection (12, 38) est configuré pour détecter un état d'agencement de l'appareil de base avec l'un ou plusieurs accessoires (6, 8, 10, 34, 36),
- **que** le dispositif de commande (14, 40) est configuré pour récupérer une ou plusieurs informations d'utilisateur de la base de données du support de stockage (16, 42),
- **que** le dispositif de commande (14, 40) est configuré pour sélectionner une ou plusieurs recettes de préparation prédéfinies de la base de données du support de stockage (16, 42) en fonction de l'état d'agencement détecté de l'appareil de cuisine (20) et de l'une ou plusieurs informations d'utilisateur récupérées,
- **que** l'interface de communication (18, 44) est configurée pour fournir l'une ou plusieurs recettes de préparation sélectionnées,
- **que** l'une ou plusieurs recettes de préparation prédéfinies de la base de données a une ou plusieurs exigences d'utilisation,
- **que** la base de données a un ou plusieurs états de référence prédéfinis, où une ou plusieurs aptitudes d'utilisation sont attribuées à chaque état de référence,
- **que** le dispositif de commande (14, 40) est configuré pour comparer un état d'agencement détecté de l'appareil de cuisine (20) à l'un ou plusieurs états de référence prédéfinis et fournir une ou plusieurs aptitudes d'utilisation en fonction du résultat de comparaison, et
- **que** le dispositif de commande (14, 40) est configuré pour mettre en correspondance l'une ou plusieurs aptitudes d'utilisation fournies avec une ou plusieurs exigences d'utilisation et sélectionner une ou plusieurs recettes de préparation en fonction du résultat de correspondance.

7. Système (2, 30) selon la revendication 6,
**caractérisé en ce,**
- **que** l'une ou plusieurs recettes de préparation prédéfinies de la base de données a une ou plusieurs indications d'aliment,
- **qu'**un autre dispositif de détection (12, 38) est prévu, qui est configuré pour détecter une ou plusieurs informations sur des aliments, et
- **que** le dispositif de commande (14, 40) est configuré pour mettre en correspondance une information sur des aliments détectée avec une ou plusieurs indications d'aliment d'une recette de préparation et sélectionner une ou plusieurs recettes de préparation en fonction du résultat de correspondance.

8. Système (2, 30) selon la revendication 6 ou 7,
**caractérisé en ce,**
- **que** l'une ou plusieurs recettes de préparation prédéfinies de la base de données a une ou plusieurs indications d'environnement,
- **qu'**un autre dispositif de détection (52) est prévu, qui est configuré pour détecter une ou plusieurs informations d'environnement, et
- **que** le dispositif de commande (14, 40) est configuré pour mettre en correspondance une information d'environnement détectée avec une ou plusieurs indications d'environnement d'une recette de préparation et sélectionner une ou plusieurs recettes de préparation en fonction du résultat de correspondance.

9. Système (2, 30) selon l'une des revendications 6 à 8,
**caractérisé en ce,**
- **que** le dispositif de commande (14, 40) est configuré pour générer une recette de préparation adaptée,
- où la recette de préparation adaptée a un ou plusieurs paramètres de préparation adaptés à au moins un élément de la liste suivante ou à une combinaison de ceux-ci : un état d'agencement, une information d'utilisateur, une information sur des aliments, une information d'environnement.

10. Système (2, 30) selon l'une des revendications 6 à 9,
**caractérisé en ce,**
- **que** l'interface de communication (18, 44) est configurée pour détecter une saisie d'utilisateur avec une information concernant un choix de utilisateur d'une recette de préparation fournie et la transmettre au dispositif de commande (14, 40), et
- **que** le dispositif de commande (14, 40) est configuré pour commander l'appareil de base (4, 32) et l'un ou plusieurs accessoires (6, 8, 10, 34, 36) conformément au choix de utilisateur.

11. Programme informatique avec des instructions, lesquelles, lorsqu'elles sont exécutées par un système (2, 30) selon l'une des revendications 6 à 10, amènent le système (2, 30) à exécuter une méthode selon l'une des revendications 1 à 5.

12. Dispositif de commande (14, 40) avec un processeur et avec un support de stockage (16, 42), où le support de stockage (16, 42) a un programme informatique selon la revendication 11.
